# EUROPEAN PATENT APPLICATION

(11) **EP 3 747 726 A1**
(43) Date of publication of application: **09.12.2020**
(21) Application number: 18904251.8
(22) Date of filing: 21.11.2018
(51) Int. Cl.: B61L 23/00, B60L 3/00, B60L 15/42, B61D 37/00, B61K 13/04, B61L 25/02, H04N 7/18

(54) **CAR INFORMATION CONTROL DEVICE**

(30) Priority: 31.01.2018 JP 2018016029
(71) Applicant: Hitachi, Ltd., Tokyo 100-8280 (JP)
(72) Inventor: AYABE, Kazunori, Tokyo 100-8280 (JP)
(74) Representative: Mewburn Ellis LLP
(86) International application number: PCT/JP2018/043089
(87) International publication number: WO 2019/150719

(57) **Abstract**

Provided is an operation support control means for estimating an operational state of a train on the basis of train service data information, operation information of a train crew, and train operating state information, for selecting a camera image, according to the operational state of the train, from a plurality of camera images captured using respective cameras disposed at respective positions in cars of the train where the state of each position is difficult to directly visually check from the position of a train driver, a conductor, or a train crew who is an operator similar to the conductor, and for displaying the selected camera image on a screen of a control platform display.

## Description

### TECHNICAL FIELD

The present invention is related to a car information control device to collect and manage information on operating conditions of a train and on conditions of various devices mounted in the train and controls the train. Particularly, the present invention can be suitably applied to a car information control device which exhibits a train operation support function for a train crew including drivers, conductors and similar operators.

### BACKGROUND ART

Generally, in a car information control device used in railway car operation, camera images taken by monitoring cameras installed outside cars forming a train or inside passenger cabins or on decks of such cars are, as a crew support function, displayed based on train state information on a driver's platform display device.

In a first prior art of this type, plural monitoring cameras, emergency call devices, display devices, and information processing devices are installed in train passenger cabins, and, when a call signal is received from an emergency call device, a corresponding monitoring camera is identified out of the plural monitoring cameras and an image based on image data outputted from the monitoring camera is displayed on a display device (see patent literature 1).

In a second prior art of this type, plural ultrasonic sensors and cameras are attached to above plural doors of cars, the sensors being for detecting foreign objects around each door, and, when a foreign object is detected, a corresponding camera is activated, and an image of a peripheral part of a corresponding door is taken by the camera and is displayed on display means (see patent literature 2).

In a third prior art of this type, cameras are attached to above side entrances of railway cars to shoot passengers on a platform and images taken by the cameras are displayed on a monitor installed in a crew cabin (see patent literature 3).

### CITATION LIST

### Patent Literature

Patent literature 1: WO Publication: 2014/109039
Patent literature 2: Japanese Unexamined Patent Application Publication No. 2009-220658
Patent literature 3: Japanese Unexamined Patent Application Publication No. 2012-1191

### SUMMARY OF INVENTION

### Technical Problem

According to the above prior arts, a function for supporting the work performed by crew members to confirm safety and conditions directly related to the safety of passengers using railway cars can be provided, but the following problems remain.

The first prior art does not include any consideration for safety confirmation to be made in relation to various other car operations performed by crew members while running cars and changes in the conditions of car operations. For example, no consideration is given to coordinated intra-system actions to be taken responding to changes in the situation of actual car operations; such actions being, for example, identifying a corresponding monitoring camera and allowing crew members to optionally select an image to be displayed, for safety confirmation, on a driver's platform display device when an emergency call is received while an operation for safety confirmation is performed, for example, in cases in which an emergency call is received whereas an accident such as a brake failure or a car failure to affect the safety of a whole car has occurred or whereas car conditions are being confirmed or passenger safety is being confirmed on a screen of a driver's platform display device or in cases in which an emergency call is received while a crew member is engaged with conversation with a passenger having made a preceding emergency call.

According to the second prior art, for example, to detect foreign objects near doors, it is necessary to newly install measuring sensors, such as ultrasonic sensors, to doors of each car. This increases costs correspondingly to the number of sensors, and the amount of car construction work also increases. Also, generally, the more the sensors installed, the higher the failure ratio and the maintenance cost. Further, since railway cars each have plural doors, there are cases in real car operations where foreign objects are detected simultaneously at plural doors, but no consideration is given as to intra-system coordination related to screen display in such a situation.

According to the third prior art, an aspect is represented in which a bird's-eye view of a platform and all entrances of cars is fixedly displayed on a display device screen, but no consideration is given as to selectively displaying on a display device screen a camera image of a location determined as requiring safety confirmation based on car conditions represented, for example, by car operation data and crew operations and arranging intra-system coordination.

The present invention has been made in view of the above points and is intended to propose a car information control device capable of suppressing costs related to, for example, sensor introduction and the amount of car construction work through intra-system coordination for smoothly and securely confirming safety of car operations crew members are required to perform while running cars and of conditions of various parts of cars and also for smoothly and securely grasping car conditions.

### Solution to Problem

To solve the above problems, the present invention provides a car information control device which collects and manages information on operating conditions of each of cars included in a train and information on various devices installed in the each car and which controls the train. The car information control device includes: a plurality of cameras positioned in parts of each of the cars included in the train, the parts being such that their conditions are difficult to directly and visually confirm from where crew members are positioned, the crew members including a driver, a conductor, and a similar operator; and operation support control means for estimating an operation state of the train based on operation data information on the train, information on operations by the crew members and information on operating conditions of the train and, corresponding to the operation state of the train, selectively displaying a plurality of camera images respectively taken by the plurality of cameras on a screen of a driver's platform display device.

### Advantageous Effects of Invention

According to the present invention, costs related to, for example, sensor introduction and the amount of car construction work can be suppressed through intra-system coordination to smoothly and securely confirm safety concerning car operations crew members are required to perform while running cars and conditions of various parts of cars and also to smoothly and securely grasp car conditions.

### BRIEF DESCRIPTION OF DRAWINGS

Fig. 1 is a configuration diagram showing an example overall configuration of an operation support image display system according to the present embodiment.
Fig. 2 is a block diagram showing a configuration of a main part of an operation support control system according to the present embodiment.
Fig. 3 is a flowchart showing an example of processing performed by means for estimating a state of train operation according to the present embodiment.
Fig. 4 is a flowchart showing an example of processing performed by means for support control command determination according to the present embodiment.
Fig. 5 is a flowchart showing an example of processing performed by camera image selection means according to the present embodiment.
Fig. 6 shows an example selective display of a camera image and an example of display settings displayed on a screen according to the present embodiment.
Fig. 7 shows an example display on a screen set to fixed display mode for a camera image according to the present embodiment.
Fig. 8 shows an example screen display concerning support control operation and priority setting according to the present embodiment.
Fig. 9 is a schematic diagram illustrating operation support control operation performed when trains are coupled at a station specified for train coupling.
Fig. 10 is a diagram showing an example camera image showing operation support control operation performed when trains are coupled.
Fig. 11 is a schematic diagram illustrating a case of a train having stopped short of a specified range of a target stop position.
Fig. 12 is a diagram showing an example camera image showing a target stop position and a view in a direction toward a front position of a train.
Fig. 13 is a diagram showing an example image showing a relationship between a door position of a train and a platform gate.
Fig. 14 is a schematic diagram showing a case of a train having stopped beyond a specified range of a target stop position.
Fig. 15 is a diagram showing an example camera image showing a view in a backward direction when a train is moved back.

### DESCRIPTION OF EMBODIMENTS

In the following, an embodiment of the present invention will be described in detail with reference to drawings.

### (1) System configuration according to the present embodiment

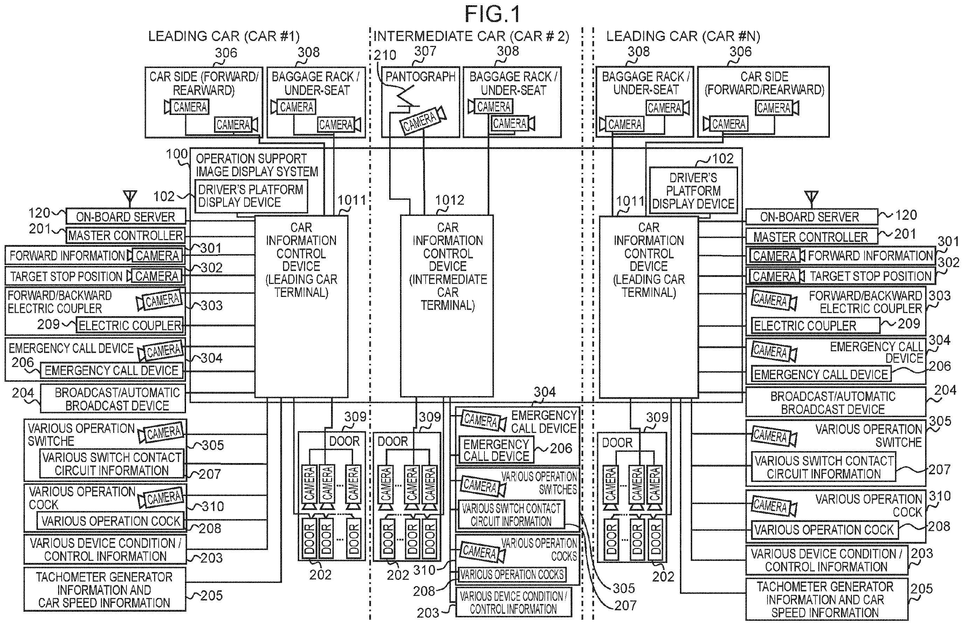

Fig. 1 shows an example overall configuration of an operation support image display system 100 according to the present embodiment.

Leading cars of a train are each mounted with a car information control device (a leading car terminal) 1011 and a driver's platform display device 102 of a touch-panel type. On the other hand, intermediate cars of the train are each mounted with a car information control device (an intermediate car terminal) 1012.

The car information control devices 1011 and 1012 are each connected via an intra-car network to operation switch information and circuit information on each car and to various operation cocks 208 and various mounted devices of each car. The operation switch information and circuit information on each car includes, for example, various switch contact circuit information 207, information on an electric coupler 209, car speed information 205 including tachometer generator information, and information on pantograph 210. On the other hand, as for the various mounted devices, information on, for example, a master controller 201 and doors 202 which a driver can operate while driving the train, various device condition/control information 203, and information on a broadcast/automatic broadcast device 204 and an emergency call device 206 is included.

Plural cameras include, for example, forward condition cameras 301, target stop position cameras 302, electric coupler cameras 303, emergency call device cameras 304, various operation switch cameras 305, car side (forward/rearward) cameras 306, pantograph cameras 307, baggage rack/under-seat cameras 308, door cameras 309 and various operation cock cameras 310, which are mounted in respective positions of respective cars. These cameras are connected to the car information control devices 1011 and 1012 via intra-car networks (not shown).

These cameras provide camera images of some or all of: each door of each car of the train, platform gates along with car doors, pantographs or current collector shoes (devices to have power supplied via under-car parts), couplers, car stop positions, forward and rearward sides of cars, fronts and rears of cars, various operation cocks, conditions of brake shoes and wheels or rubber tires, emergency call devices, under-seat parts, baggage racks, and decks.

Between the cars, the car information control devices 1011 and 1012 are interconnected via an inter-car network (not shown). The car information control devices will hereinafter be collectively referred to as a "car information control device 101." The car information control device 101 exchanges, collects and manages information on operating conditions and various devices of cars, controls the train by transmitting control information based on such information, and has car condition information, failure information and control information displayed on the driver's platform display devices 102.

The car information control device 101 is connected to on-board servers 120 via the intra-car networks. The car information control device 101 distributes data on camera images displayed on the driver's platform display devices 102 to servers or other terminal devices installed on the ground side, not shown, by wireless communication via the on-board servers 120. The car information control device 101 implements announcement using the broadcast/automatic broadcast devices 204 or driver's platform speakers (not shown).

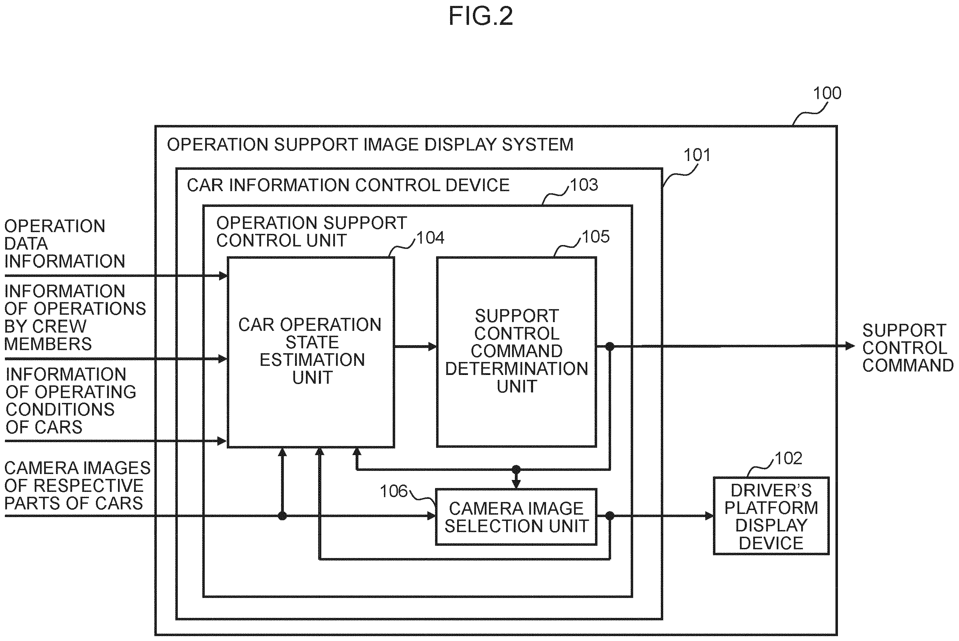

Fig. 2 shows an example configuration of the car information control device 101 making up a main part of the operation support image display system 100 shown in Fig. 1. The car information control device 101 includes an operation support control unit 103.

The operation support control unit 103 has a function of selectively displaying, according to the state of train operation, plural camera images taken by plural cameras installed in various parts, not directly visually checkable from crew positions, of the respective cars on the screen of the driver's platform display device 102, and also has a function of outputting support control commands for supporting crew operations to circuits and devices installed in various parts of the train.

The operation support control unit 103 includes a car operation state estimation unit 104, a support control command determination unit 105, and a camera image selection unit 106.

The car operation state estimation unit 104 has a function of estimating and determining the state of train operation based on train operation data information, crew operation information, and information on the operating conditions of the train.

The support control command determination unit 105 has a function of outputting, based on a result of estimating the state of train operation, support control commands required for various support control operations to be performed according to the operation state of each car of the train to circuits and devices installed in different parts of each car.

The camera image selection unit 106 has a function of selectively displaying, based on the above-described support control commands, plural camera images taken by plural cameras installed in various parts of each car of the train on the screen of the driver's platform display device 102.

### (2) Train operation state estimation processing

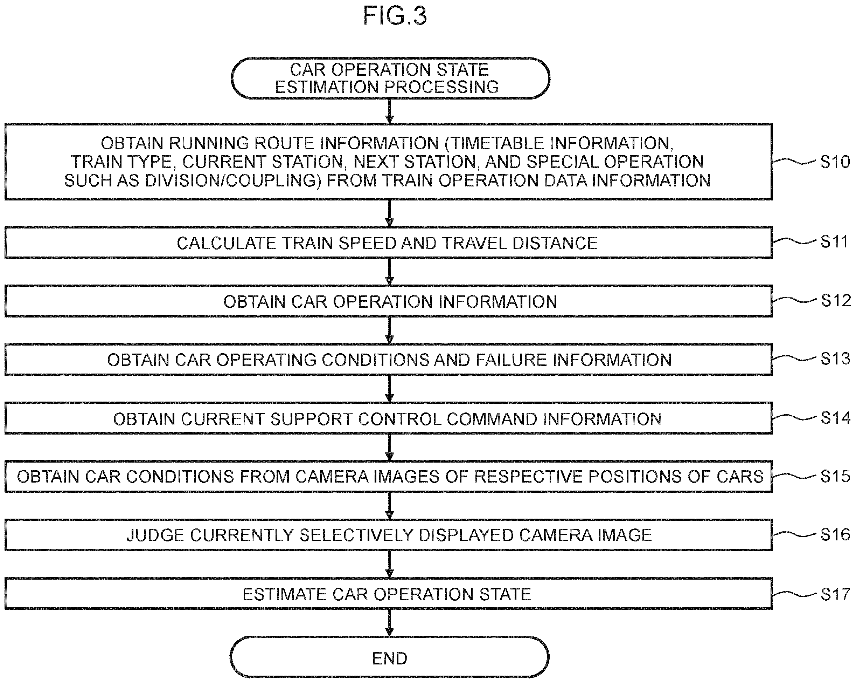

Next, processing for estimating the state of train operation will be described. Fig. 3 is a flowchart showing an example of processing performed at the car operation state estimation unit 104.

In step S10, the car operation state estimation unit 104 obtains, from received train operation data information, running route information, for example, information about train number, timetable, train type, current station, next station, and station where to perform special operation such as train division/coupling, and uses such information as an element in estimating the state of train operation.

In step S11, the car operation state estimation unit 104 calculates the distance run by the train based on train speed information obtained from a tachometer generator or a connected device and determines the train location and the train running condition, then uses the determined information as an element in estimating the state of train operation.

In step S12, the car operation state estimation unit 104 obtains crew operation information, for example, operation information on a master controller 201 operated by a driver during train operation and operation information on various switches and operation cocks, and uses the information obtained as an element in estimating the state of train operation.

In step S13, the car operation state estimation unit 104 obtains information on operating conditions of the train, for example, information on various car circuit operations, operating conditions of devices and failure information related to, for example, the door cameras 309 and pantograph cameras 307 and uses the information obtained as an element in estimating the state of train operation.

In step S14, the car operation state estimation unit 104 obtains a support control command currently outputted from the operation support control unit 103 and uses the information obtained as an element in estimating the state of train operation.

In step S15, the car operation state estimation unit 104 obtains camera images taken by cameras installed in various parts of each car and recognizes the camera images obtained, then uses the camera images obtained as an element in estimating the state of train operation.

Even though, the above description of the present embodiment includes description of an example case in which the car operation state estimation unit 104 obtains and recognizes camera images taken by the cameras installed in various parts of each car and uses the recognized camera images as an element in estimating the state of train operation, an alternative configuration may be used in which, without involving image recognition, the state of train operation is estimated by performing the above steps S10 through S14 excluding the above step S15.

In step S16, the car operation state estimation unit 104 obtains information on the camera image currently selectively displayed by the camera image selection unit 106 and uses the information obtained as an element in estimating the state of car operation.

In step S17, the car operation state estimation unit 104 estimates, based on the information obtained in the above steps S10 through S16, the state of self-train operation and communicates the estimation result to the support control command determination unit 105. This ends a series of processing performed by the car operation state estimation unit 104.

### (3) Support control command determination processing

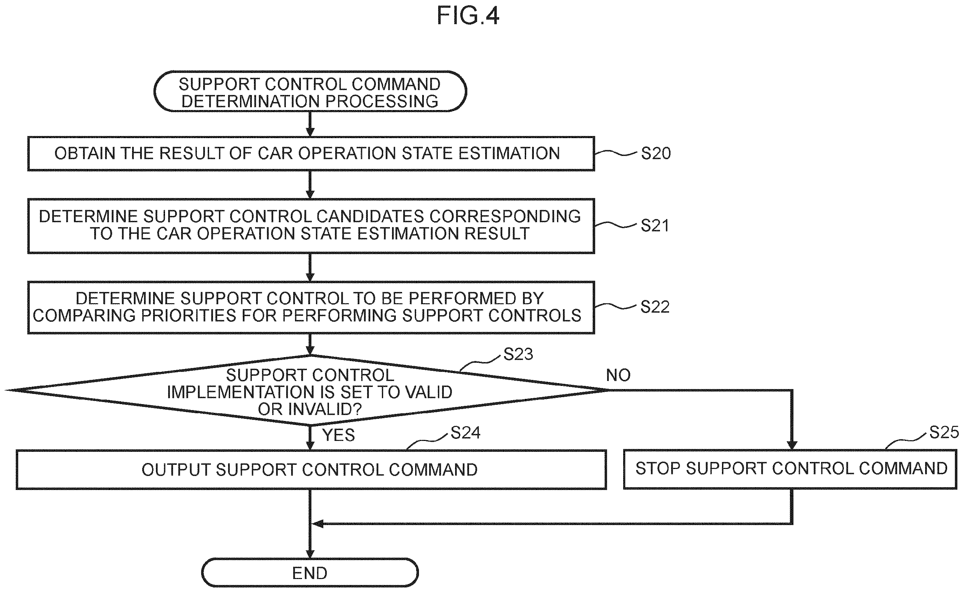

Next, support control command determination processing performed by the support control command determination unit 105 will be described. Fig. 4 shows an example of processing performed by the support control command determination unit 105.

In step S20, the support control command determination unit 105 obtains the result of train operation state estimation communicated to from the car operation state estimation unit 104.

In step S21, the support control command determination unit 105 determines support control candidates corresponding to the result of train operation state estimation obtained in the above step S20.

In step S22, in a case where plural support control operation candidates have been determined in the above step S21 based on the result of train operation state estimation, the support control command determination unit 105 determines, by comparing priorities pre-defined for different support controls, a support control to be performed. The priorities pre-defined for different support controls can be changed by screen setting on the driver's platform display device 102.

In step S23, the support control command determination unit 105 determines, by referring to the state of setting as to whether support control implementation is valid or invalid, processing to be performed next. When support control implementation is set to be valid, processing advances to step S24 and, when support control implementation is set to be invalid, step S25 is performed.

In step S24, the support control command determination unit 105 outputs a support control command corresponding to the support control determined in the above step S22 to the car circuits and devices to be the targets of control and notifies the camera image selection unit 106 of the outputted support control command.

On the other hand, when it is determined in the above step S23 that support control implementation is set to be invalid, the support control command determination unit 105 does not output the support control command (step S25) and notifies the camera image selection unit 106 of the support control command invalid state. This ends a series of processing performed by the support control command determination unit 105.

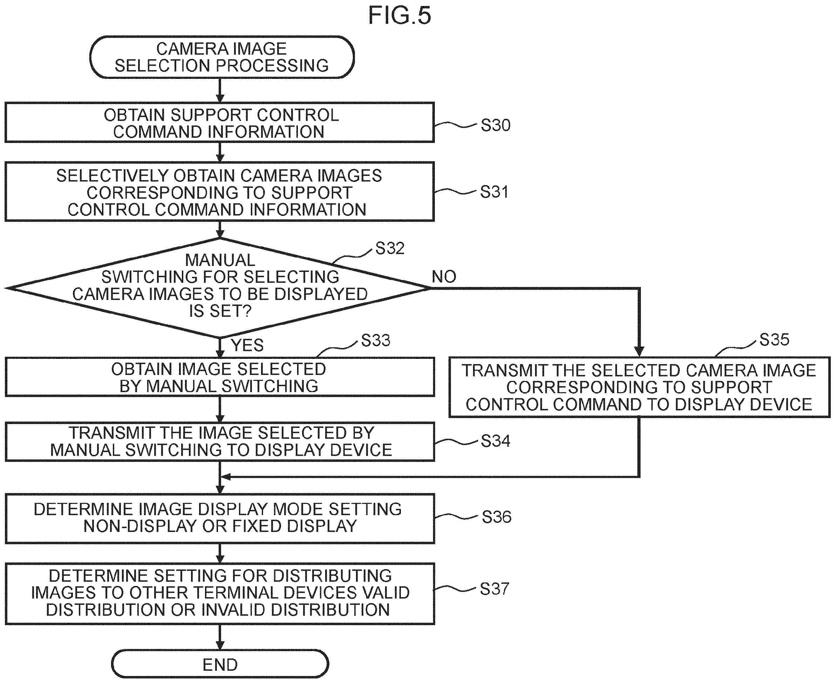

Next, processing performed by the camera image selection unit 106 will be described. Fig. 5 shows an example of processing performed by the camera image selection unit 106.

In step S30, the camera image selection unit 106 obtains a support control command notified of by the support control command determination unit 105. In step S31, the camera image selection unit 106 selectively obtains camera images of various parts of each car corresponding to the support control command obtained in the above step S30.

In step S32, the camera image selection unit 106 determines, by referring to the state of manual switching selection for camera images to be displayed on the driver's platform display device 102, processing to be performed next. In a case where camera images to be displayed on the driver's platform display device 102 are optionally selected by manual switching, the camera image selection unit 106 performs step S33. On the other hand, when camera images to be displayed on the driver's platform display device 102 are not optionally selected by manual switching, the camera image selection unit 106 performs step S34.

In step S33, the camera image selection unit 106 obtains a camera image selectively specified by manual camera image selection. In step S34, the camera image selection unit 106 transmits the camera image selectively specified by manual switching and obtained in the above step S33 to the driver's platform display device 102.

In step S35, on the other hand, the camera image selection unit 106 transmits the camera image, obtained in the above step S31, that corresponds to the support control command to the driver's platform display device 102. In step S36, the camera image selection unit 106 determines whether the screen display mode is set to camera image non-display or to fixed display and notifies the driver's platform display device 102 of the display mode.

In step S37, the camera image selection unit 106 determines whether the setting for distributing the camera image displayed on the driver's platform display device 102 to terminal devices of other cars than the relevant car is valid or invalid. When the setting is valid, the camera image selection unit 106 distributes camera image data on the camera image displayed on the driver's platform display device 102 to other terminal devices. When the setting for camera image distribution to other devices is invalid, the camera image selection unit 106 does not distribute the camera image data.

As an example of image distribution to other terminal devices, an example configuration for image distribution via an on-board server 120 shown in Fig. 1 is shown. Though, the example configuration of the present embodiment allows image distribution to other terminal devices, processing for image distribution to other terminal devices is not necessarily essential. In cases where image distribution to other terminal devices is not performed, the camera image selection unit 106 may execute step S30 and other steps shown in Fig. 5 skipping step S37. A series of processing by the camera image selection unit 106 ends in the manner described above.

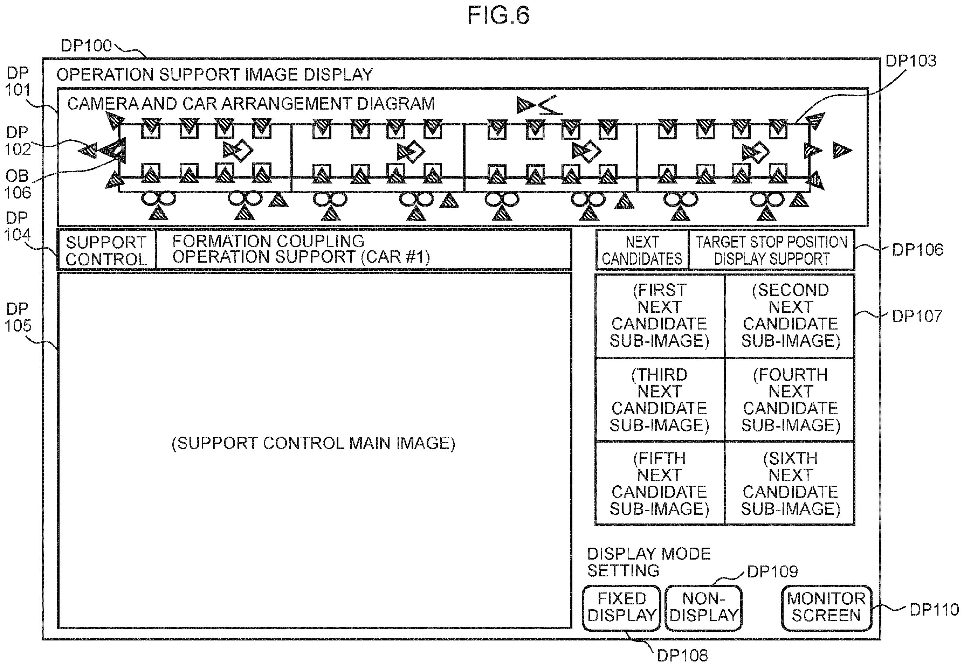

Next, operation support camera image display on the screen and screen operations to be performed on the driver's platform display device 102 will be described. Fig. 6 shows an example selective display of operation support camera images and an example display setting displayed on the screen according to the present embodiment.

In the illustrated example, an operation support image display screen DP100 includes a camera and car arrangement diagram DP101 which is a display area where the states of cameras arranged in cars and the state of a camera providing an image selectively displayed on the screen of the driver's platform display device 102 are displayed, an area DP104 where the support control item currently being performed is indicated, an area DP105 where a camera image of a part of a car corresponding to the support control item currently being performed (a support control main image) is displayed, an area DP106 where, in cases in which there are plural support control item candidates other than the one represented by the support control main image DP105, one of high-priority support control items (next candidate) among such support control item candidates is displayed, an area DP107 where camera images (next candidate sub-images) of parts of cars corresponding to such other candidate support control items are displayed, areas DP108 and DP109 where keys for setting camera image display mode are located, and an area DP110 where a screen transition key is located.

The camera and car arrangement diagram DP101 includes a car diagram DP103 schematically indicating arrangement of, for example, doors, pantographs and emergency call devices and the like and also includes a camera-imaged parts DP102, an area where camera locations (represented by hatched triangles in the diagram) with respect to car positions are indicated.

The location of the camera, the image being taken by which is currently selectively displayed on the screen, is represented by high-lighting in the indication of camera-imaged parts DP-102 (represented by a red triangle OB106 in the indication), making recognition by crew members easy.

Further, the camera image or images displayed in the support control main image DP105 or in the next candidate sub-images DP107 can be changed, for example, by optionally changing current selections of camera-imaged parts in DP102.

Further, by selecting, for example, by touch-panel operation on the screen, an optional image out of the next candidate sub-images DP107, the selected image can be displayed in the support control main image DP105.

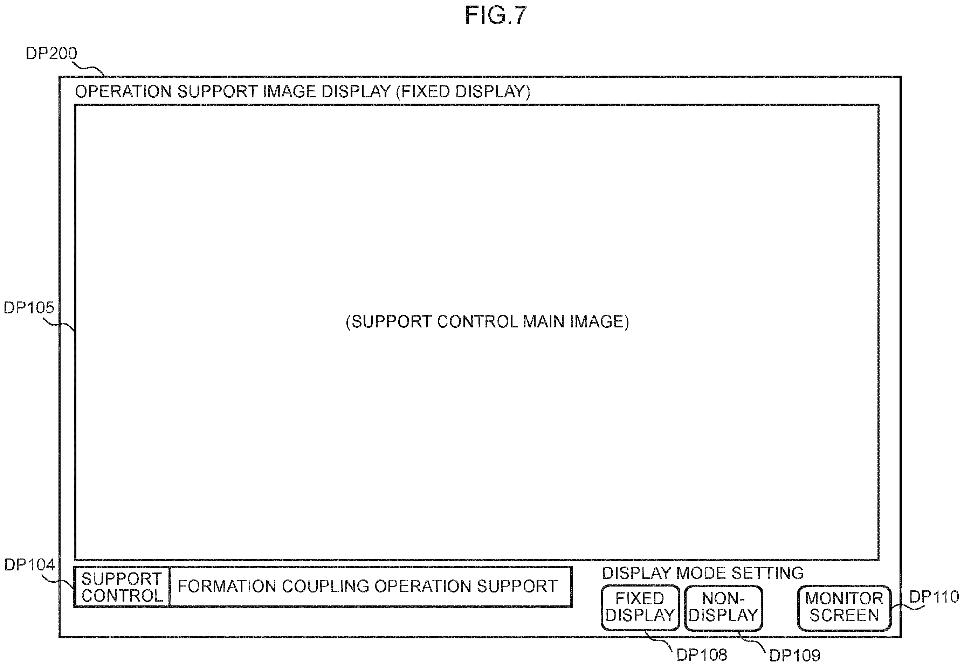

For the camera image selectively displayed in the support control main image DP105, the display format can be changed using the relevant display mode setting key. For example, operating the fixed display key DP108 causes the screen display to transit to an operation support image display (fixed display) screen DP200 shown in Fig. 7. This causes the support control main image DP105 to be fixedly displayed over the entire screen.

When, the fixed display release key DP201 is operated on the operation support image display (fixed display) screen DP200, the fixed display is released and the screen display DP100 shown in Fig. 5 is restored.

Referring to Figs. 6 and 7, it is also possible not to display the camera image selectively displayed in the support control main image DP105 by operating the non-display key for display mode setting.

Also, by operating the monitor screen DP110 key, it is possible to transit to a different screen (for example, a monitor function screen) of the car information control device.

### (4) Support control operation setting screens and screen operations

Next, various setting screens and screen operations for support control operations at the driver's platform display device 102 will be described.

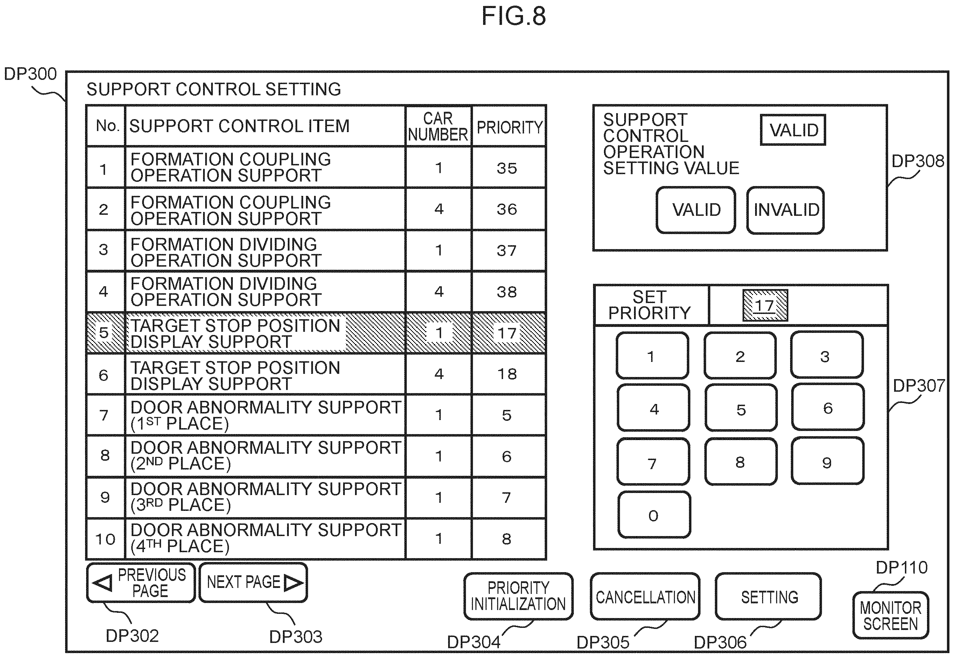

Fig. 8 shows an example screen display concerning support control operation valid/invalid setting and support control operation priority setting. In the example shown, a support control setting screen DP300 includes support control items as an area for displaying support control items and corresponding car numbers and priorities, a next page key DP303 for advancing the current display of support control items and item numbers to the next page to display the subsequent support control items and item numbers, and a previous page key DP302 for returning the current display of support control items and item numbers to the previous page to display the preceding support control items and item numbers. In the support control item display, each item display in the support control item column also servers as a priority selection key for the corresponding item.

Furthermore, priority changing keys DP307 which are ten keys and a display area (above where the ten keys are arranged) for displaying a priority number selected using priority changing keys, a setting key DP306 for setting a priority selected using the priority changing keys DP307, and a cancellation key DP305 for cancelling the priority selected using the priority changing keys DP307 are also arranged.

When a support control item is selectively inputted in the support control items DP301 as a target of priority setting and a priority number is selectively inputted using the priority changing keys DP307 and then the priority setting key DP306 is selectively inputted, the selectively inputted priority number is displayed in the priority display field for the support control item in the support control items DP301. This updates the support control execution priorities to be referred to in step S22 shown in Fig. 4.

Further, when it becomes necessary, for example, in accordance with an operation plan, to change the priority changed as described above to an initial setting, the changed priority can be initialized by selectively setting a priority initialization key DP304 and then selectively setting the setting key DP306.

Also, selectively setting the valid key positioned in a support control operation setting DP308 makes support control operation performable, and selectively setting the invalid key makes support control operation not performable. The setting of whether support control operation is valid or invalid is displayed in a display field in an upper part of the support control operation setting DP308, so that the current setting can be confirmed.

### (5) Example of support control using operation support image display system

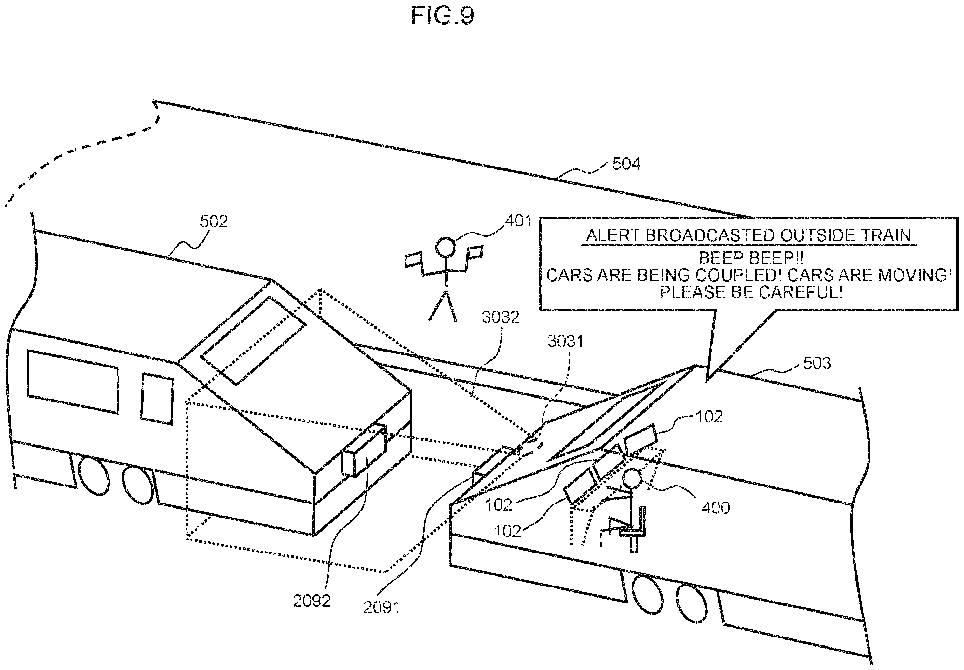

Next, an example of support control performed, using the operation support image display system 100, in various aspects of operation according to the above-described embodiment will be described. Fig. 9 illustrates an example of operation support control operation at a station where train coupling is carried out.

In the illustrated example, as in a general train coupling operation, a counterpart train 502 to be coupled is stopped at a predetermined coupling position at the station, waiting to be coupled by a following own train 503.

For train coupling, a coupling worker 401 is positioned at a predetermined coupling position of a platform 504 of the station. The coupling worker 401 is assigned a role of checking, as the own train 503 approaches the counterpart train 502, the distance between the trains and giving a signal for safe coupling operation to a driver 400 of the own train 503.

In a general coupling operation, it is difficult to directly visually check, from the position of the driver 400 driving the own train 503, the condition and the front part of an electric coupler (or a coupler) 2091 of the own train and the distances to the counterpart train 502 and its electric coupler (or a coupler) 2092. Therefore, the driver 400 of the own train 503 once stops in front of a coupling position predetermined at the station, then carries out train coupling by advancing the train following the guidance of the coupling worker 401.

In the coupling operation, there are aspects in which, for grasping the distance being narrowed between the electric coupler 2092 of the counterpart train 502 in front and the electric coupler 2091 of the own train 503, the driver 400 relies on guiding signals given by the coupling worker 401 checking the distance between the trains and also on the empirically acquired feeling of the driver 400 for sensing the distance from the front part of the own train 503.

Also, in a case where support control by the operation support image display system 100 of the present embodiment is performed in the above operational phase, when the station where coupling is to be carried out is recognized by the own train 503 based on operation data and information on the location of the own train, an image taken by an electric coupler camera 3031 for imaging a forward-direction view (in the direction toward the counterpart train 502 and the electric coupler 2092 of the counterpart train 502) including an image of the electric coupler 2091 of the own train (i.e. an image covering an imaging range 3032) is displayed on the driver's platform display device 102.

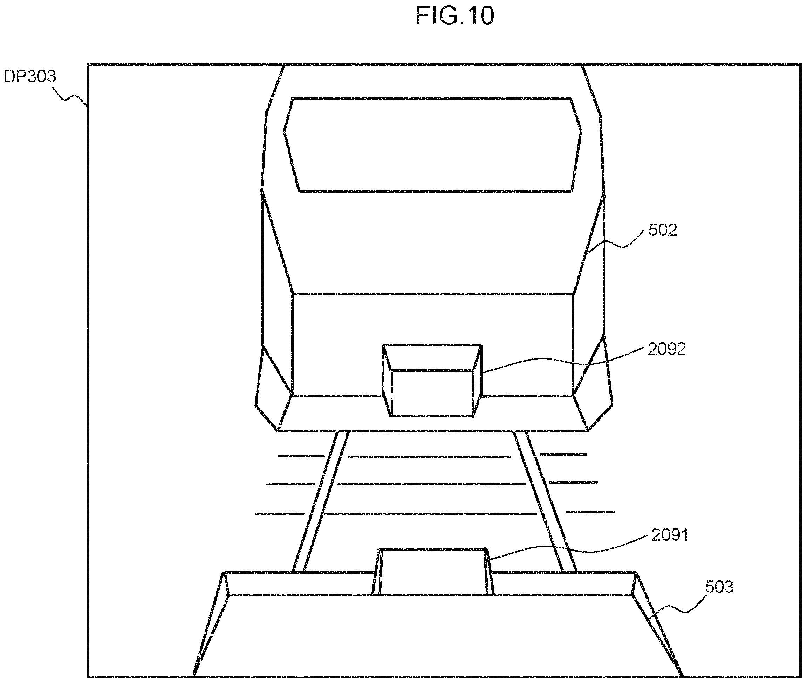

Fig. 10 shows an example of an image taken by the electric coupler camera 3031 and displayed on the driver's platform display device 102. An image display screen DP303 to display an operation support camera image during coupling operation appears on the support control main image DP105 shown in Figs. 6 and 7 described in the foregoing. The image display screen DP303 to display an operation support camera image during coupling operation shows the coupling counterpart train 502, the electric coupler 2092 of the counterpart train 502, the front of the own train 503, and a front part of the electric coupler 2091 of the own train.

During coupling operation, while the driver 400 follows the guidance of the coupling worker 401, the image display screen DP303 to display an operation support camera image during coupling operation appears on the driver's platform display device 102 and allows the driver to clearly confirm the positions of the front of the own train 503 and a front part of the electric coupler 2091 of the own train and the positions of the counterpart train 503 and the electric coupler 2092 of the counterpart train. Therefore, compared with generally performed coupling operation, operation can be performed more smoothly and safely according to the present embodiment.

While, in recent years, the front shapes of trains vary with air resistance taken into consideration and featuring unique designs, the training period for the driver 400 required to learn distances related with the train that the driver drives can be shortened.

Further, as shown in Fig. 9, during the coupling operation, by outputting a support control command to the broadcast device or automatic broadcast device 204, an alert can be broadcasted concurrently outside the train to alert people on the platform.

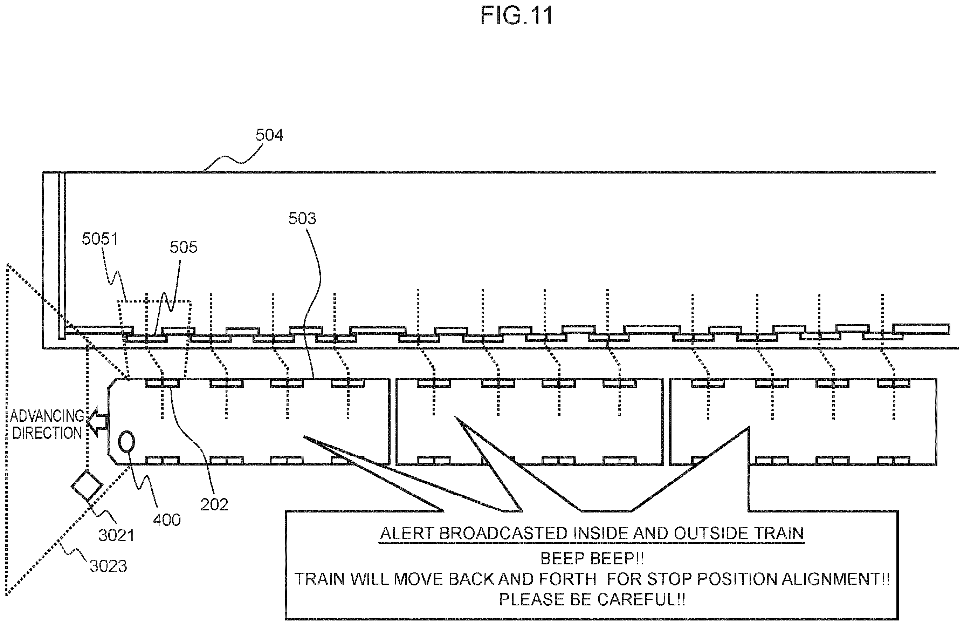

Next, other operation aspects will be described. Fig. 11 illustrates an example case in which, at a station equipped with so-called platform gates, the train 503 stopped short of a stop position accuracy range (for example, within ±500 mm of target stop position) specified for operation with respect to a target stop position 3021.

In the illustrated example, with the train stopped short of the target stop position 3021, the position of a door 202 of the train and the position of a platform gate 505 do not align, so that, in this state, opening doors as normal train operation is not allowed. Hence, the driver 400 is required to advance the train again in the arrowed direction and stop the train with its front positioned within the stop position accuracy range with respect to the target stop position 3021.

At this time, by assuming that the train stopped short of the target stop position 3021 based on operation data, position of the own train, and stop accuracy information or platform gate interlocking information, an image taken by camera 3023 showing the target stop position 3021 and a forward direction view of the train is displayed on the driver's platform display device 102 as an operation-support operation for when a train stopped short of a target.

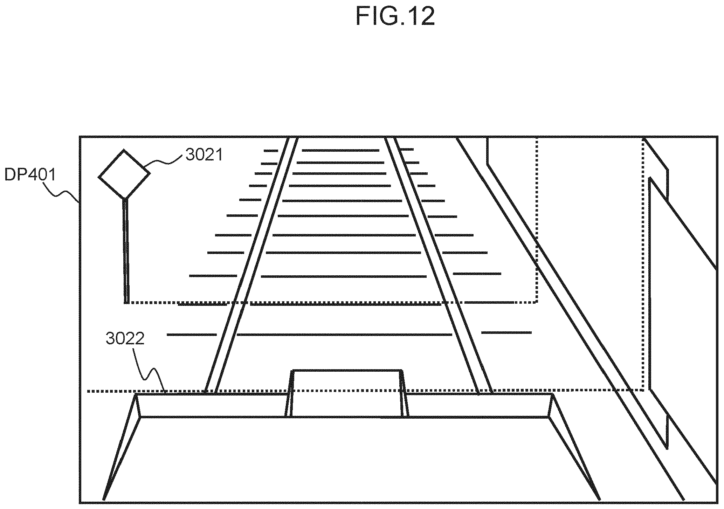

Fig. 12 shows an example of a camera image displayed on the driver's platform display device 102. A DO491 screen shown in the figure is displayed in the area DP105 shown in the foregoing Fig. 6 and Fig. 7. The image shown in DP401 shows the target stop position 3021 and the front position 3022 of the own train.

In this way, the driver 400 driving the own train can check the positional relationship between the target stop position 3021 and the front position 3022 of the own train by looking at the image displayed on the driver's platform display device 102 and can confirm the state of the train to be aligned to the stop position, so that train operation can be smoothly performed.

Further, the operation to align the front position of the train to the target stop position also makes it possible to check the positional relationship between the train door 202 and the platform gate 505 by switching the display on the driver's platform display device 102 to the camera image 5051 shown in Fig. 11.

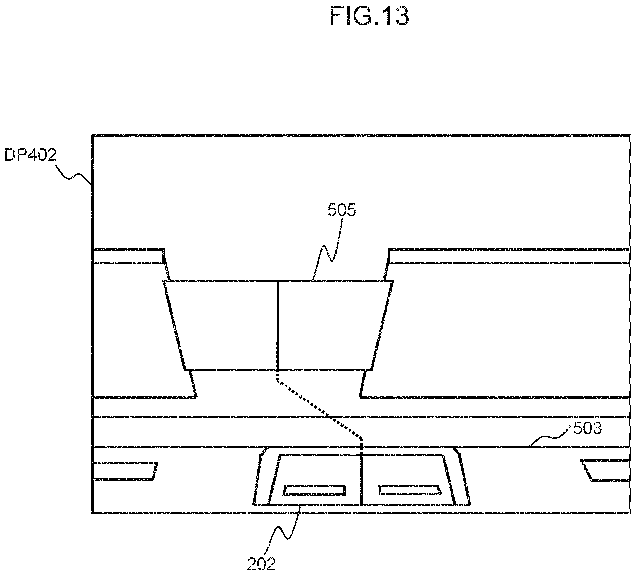

Fig. 13 shows an example positional relationship between the train door 202 and the platform gate 505. During the foregoing operation support control operation for position alignment, by outputting a support control command to the broadcast device or automatic broadcast device, an alert can be broadcasted concurrently outside the train to alert people on the platform.

Generally, at a station equipped with platform gates, trains are automatically stopped using, for example, an automatic train operation device (ATO) and a train automatic stop-position controller (TASC). It is, however, assumed that there are cases in which trains fail to stop within a specified target stop position range due to effects of the weather causing changes in the rail surface condition and changes in the train weight affected by occupancy rate.

When a train stops short of a specified target stop position range, the train is advanced by inching control (inching operation) provided by the automatic train operation device used for position alignment. The inching control operation is performed for control at a time of emergency, and its main purpose is to stop the train after moving the train closely to a target stop position based on the distance to the stop target. For this, the brake of the train is released, the train is power-run and is braked instantly to stop at the target stop position. Seemingly, there are concerns about effects on passengers' ride comfort and impacts on passengers.

When performing operation support control according to the present embodiment, by outputting a support control command to the broadcast/automatic broadcast device 204 and thereby broadcasting an alert to the passengers on the train, it is possible to alert the passengers on the train against accidents caused by sudden starting and stopping of the train.

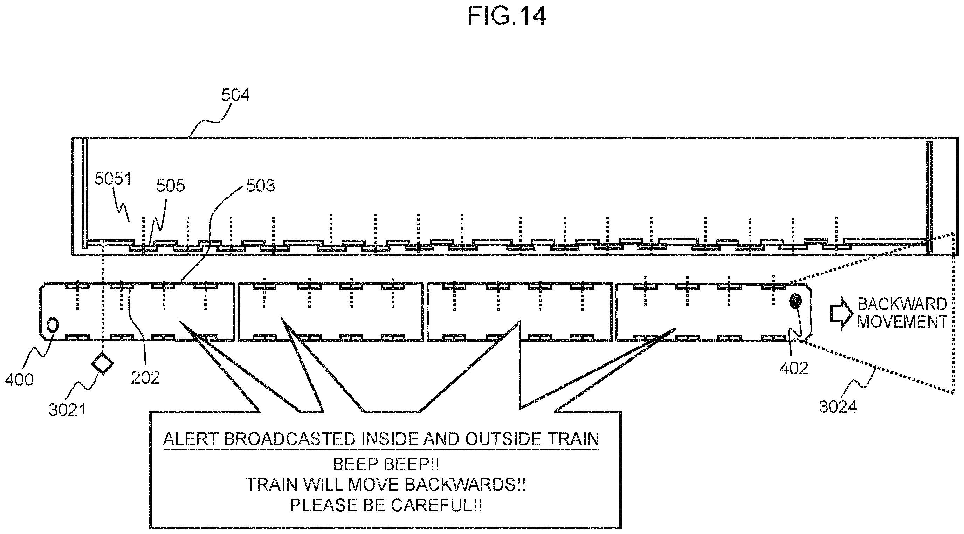

Fig. 14 schematically illustrates a case in which, contrary to the foregoing, operation to move a train back is necessary. In the case shown in Fig. 14, a train is stopped beyond a specified range of the target stop position 3021 at a station. In this case, the driver 400 is required to perform operation to move the train in the direction toward the driver's platform on the conductor 402 side (in the arrowed backward direction).

In this operation, though not normally required, to allow the driver 400 to move the train back, the conductor 402 is required to check safety in the backward direction while wirelessly communicating with the driver 400. In this case, a camera image 3024 showing a view in the backward direction is displayed on the driver's platform display device on the driver 400 side, allowing the driver 400 to move the train backward while looking at the camera image 3024 and wirelessly communicating with the conductor 402. Hence, in this operation, safety checking and train operation can be smoothly and securely performed, so that effects on the train operation can be held to a minimum.

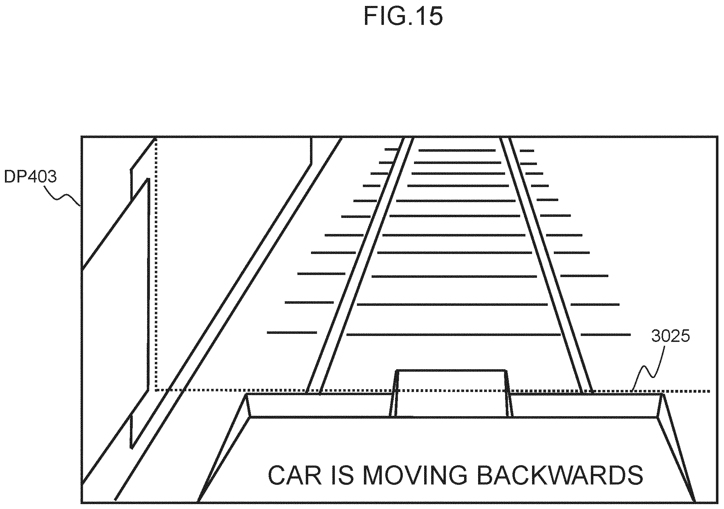

Fig. 15 shows an example of a camera image 3024 showing a view in the backward direction when a train is moved backward. Fig. 14 and Fig. 15 represent an example of a train backing operation at a station. When moving a train back during train movement at a train depot, too, the support control operation is effective and, by outputting a support control command to the broadcast/automatic broadcast device 204, an alert can be broadcasted outside the train concurrently with the operation, so that workers engaged in maintenance work and cleaning work at the train depot can be alerted.

According to the present embodiment, by effectively utilizing information on trains and devices available from the car information control devices 1011 and 1012 and expanding the use of information as a crew operation support function, the cost related with the introduction of new measurement sensors and specialized systems can be suppressed and also the amount of car construction work can be suppressed.

Further, according to the present embodiment, the broadcast/automatic broadcast device 204 is provided as announcement means which, when, for train operation, a formation of an own train and a formation of another train are coupled or divided, displays a camera image showing a corresponding coupler of the own train and the another train on the screen of the driver's platform display device 102, or, while displaying a camera image showing a corresponding coupler of the own train and the another train on the screen of the driver's platform display device 102, announces an alert to outside the train that operation is being performed to couple or divide the formation of the own train and the formation of the another train. In this way, crew members can perform necessary car operations, confirm the safety of conditions of various parts of cars smoothly and securely and grasp the conditions of cars more securely.

Further, according to the present embodiment, the broadcast/automatic broadcast device 204 is provided as announcement means which, when operation is performed at a driver's platform on one side of the train (a driver's platform of a leading car or of a car at an opposite end) to move the train back in a direction toward another driver's platform on a side opposite to the forward direction, displays a camera image showing a view in the backward direction on the screen of the driver's platform display device 102, or, while displaying the camera image showing a view in the backward direction on the screen of the driver's platform display device 102, announces an alert to outside the train that the train is moving backward. In this way, crew members can perform necessary car operations, confirm the safety of conditions of various parts of cars smoothly and securely and grasp the conditions of cars more securely.

Further, according to the present embodiment, announcement means is provided which, when operation is performed at a driver's platform on one side of the train to move the train back in a direction toward another driver's platform on a side opposite to the forward direction of the train, displays a camera image showing a view in the backward direction on the screen of a driver's platform display device, or, while displaying the camera image showing a view in the backward direction on the screen of the driver's platform display device 102, announces an alert to outside the train that the train is moving backward. In this way, crew members can perform necessary car operations, confirm the safety of conditions of various parts of cars smoothly and securely and grasp the conditions of cars more securely.

Further, according to the present embodiment described above, when the train develops an abnormal condition or a device failure, a camera image showing a corresponding car part is displayed on the screen of the driver's platform display device 102 and an alert is announced to inside and outside the car. In this way, crew members can perform necessary car operations, confirm the safety of conditions of various parts of cars smoothly and securely and grasp the conditions of cars more securely.

Further, according to the present embodiment, when a door of any car included in the train fails, a camera image of the door of the car is displayed on the screen of the driver's platform display device 102, or, an image showing the door of the car and a corresponding platform gate on the platform side is displayed on the screen of the driver's platform display device 102 and an alert is announced to outside the car. In this way, crew members can perform necessary car operations, confirm the safety of conditions of various parts of cars smoothly and securely and grasp the conditions of cars more securely.

Further, in the embodiment, when a brake of any car included in the train develops an abnormal condition or the pressure of the brake becomes abnormal, an image showing an operating condition of a pressure cock of the brake may be displayed on the screen of the driver's platform display device 102. In this way, crew members can perform necessary car operations, confirm the safety of conditions of various parts of cars smoothly and securely and grasp the conditions of cars more securely.

Further, according to the embodiment, when an emergency call is received from a passenger in any car included in the train, an image showing the emergency call device 206 of the car and the passenger having used the device is displayed on the screen of the driver's platform display device 102, or, corresponding to operations performed, based on contents of the emergency call from the passenger having used the device (for example, a report of a suspicious object or a report of a car fire), by any of the crew members on the screen of the driver's platform display device 102, a camera image showing a baggage rack, an under-seat part or a deck of the train is optionally selected and displayed on the screen of the driver's platform display device 102. In this way, crew members can perform necessary car operations, confirm the safety of conditions of various parts of cars smoothly and securely and grasp the conditions of cars more securely.

### (6) Other embodiments

The above embodiment is an example for describing the present invention and is not intended to limit the present invention to the embodiment only. The present invention can be implemented in various forms without departing from the purport thereof. For example, in the above embodiment, the state of car operation is estimated and a camera image corresponding to the state of operation out of those taken by cameras installed in various parts of cars is displayed on a driver's platform display device 102. In this way, crew members can perform necessary car operations, confirm the safety of conditions of various parts of cars smoothly and securely and grasp the conditions of cars.

### INDUSTRIAL APPLICABILITY

The present invention can be widely applied to car information control devices which exhibit train operation support functions for a train crew including train drivers, conductors and similar operators.

### LIST OF REFERENCE SIGNS

100 ... Operation support image display system, 101 ... Car information control device, 1011 ... Car information control device (leading car terminal), 1012 ... Car information control device (intermediate car terminal), 102 ... Driver's platform display device, 103 ... Operation support control unit, 104 ... Car operation state estimation unit, 105 ... Support control command determination unit, 106 ... Camera image selection unit, 120 ... On-board server, 201 ... Master controller, 202 ... Car door, 203 ... Various device condition/control information, 204 Broadcast/automatic broadcast device, 205 ... Tachometer generator information and car speed information, 206 ... Emergency call device, 207 ... Various operation switch contact circuit information, 208 ... Various operation cocks, 209, 2091, 2092 ... Electric couplers, 210 ... Pantograph, 301 ... Forward condition camera, 302, 3023 ... Target stop position cameras, 3021 ... Target stop position, 3022 ... Own train front position, 3024 ... Backward direction camera image, 303, 3031 ... Forward/backward electric couplers, 304 ... Emergency call device camera, 305 ... Various operation switch camera, 306 ... Forward/rearward car-side camera, 307 ... Pantograph camera, 308 ... Baggage rack/under-seat camera, 309 ... Door camera, 310 ... Various operation cock camera, 400 ... Driver, 401 ... Coupling worker, 402 ... Conductor, 502 ... Another train, 503 ... Own train, 504 ... Station platform, 505 ... Platform gate, 5051 ... Camera image of platform gate and car door position, DP100 ... Operation support image display screen, DP200 ... Operation support image display screen (fixed display), DP300 ... Support control setting screen, DP303 ... Image display screen showing operation support camera image during coupling operation, DP401 ... Image display screen showing camera image of target stop position, DP402 ... Image display screen showing camera image of platform gate and car door position, DP403 ... Image display screen showing backward direction camera image during backward car movement

## Claims

1. A car information control device which collects and manages information on operating conditions of each of cars included in a train and information on various devices installed in the each car and which controls the train, the car information control device comprising:
a plurality of cameras positioned in parts of each of the cars included in the train, the parts being such that conditions thereof are difficult to directly and visually confirm from where crew members are positioned, the crew members including a driver, a conductor, and a similar operator; and
operation support control means for estimating an operation state of the train based on operation data information on the train, information on operations by the crew members and information on operating conditions of the train and, corresponding to the operation state of the train, selectively displaying a plurality of camera images respectively taken by the plurality of cameras on a screen of a driver's platform display device.

2. The car information control device according to claim 1,
wherein the operation support control means comprises:
train operation state estimation means for estimating an operation state of the train based on the train operation data information, the information on operations by the crew members and the information on operating conditions of the train,
support control command determination means for determining, based on a result of estimating the operation state of the train, contents of various support control operations corresponding to the operation state of the train and outputting a support control command to circuits and devices positioned in parts of each of the cars and required for the support control operations, and
camera image selection means for having, based on the support control command, a plurality of camera images taken by the plurality of cameras selectively displayed on the screen of the driver's platform display device.

3. The car information control device according to claim 2,
wherein the train operation state estimation means estimates an operation state of the train based on the train operation data information, the information on operations by the crew members, the information on operating conditions of the train, and camera image information showing operating conditions of parts of the cars.

4. The car information control device according to one of claims 1 to 3,
wherein the information on operations by the crew members includes:
information on master controller operations or various switch operations performed by the crew members during operation of the train.

5. The car information control device according to one of claims 1 to 4,
wherein the information on operating conditions of the train includes:
speed information on the train and information on circuit operations in the cars or on operating conditions of devices in the cars.

6. The car information control device according to one of claims 1 to 5,
wherein the operation support control means, while determining contents of the various support control operations based on a result of estimating the operation state of the train, selectively displays, based on the support control command, a plurality of camera images taken by the plurality of cameras on the screen of the driver's platform display device and makes an announcement using announcement means.

7. The car information control device according to one of claims 1 to 6, comprising camera image selection means which, while, based on the support control command, selectively displaying a plurality of camera images taken by the plurality of cameras on the screen of the driver's platform display device, allows the plurality of selectively displayed camera images to be changed and a mode of image display to be switched between fixed display and non-display by screen operation on the driver's platform display device.

8. The car information control device according to one of claims 1 to 7, comprising support control command determination means which, when it is found, as a result of determining contents of the various support control operations based on the result of estimating the operation state of the train, that a plurality of corresponding support control operations are included, outputs a support control command determined according to predefined support control operation priority, whereas allowing the predefined support control operation priority to be changed by operation on the screen of the driver's platform display device.

9. The car information control device according to one of claims 1 to 8, comprising support control command determination means which allows setting of whether implementation of the support control operation is valid or invalid to be changed on the screen of the driver's platform display device and which, when implementation of the support control operation is set to be valid, outputs the support control command and, when implementation of the support control operation is set to be invalid, does not output the support control command.

10. The car information control device according to one of claims 1 to 9, comprising camera image selection means which sends a specific image to be displayed, out of the plurality of images taken by the plurality of cameras, on the screen of the driver's platform display device to a terminal device other than a corresponding car.

11. The car information control device according to one of claims 1 to 10, wherein the plurality of cameras take, as the plurality of camera images, images of some or all of: doors of the cars, platform gates along with the doors of the cars, pantographs or current collector shoes, couplers, stop positions for the cars, forward and rearward sides of the cars, fronts and rears of the cars, operation cocks, conditions of brake shoes and wheels or rubber tires, emergency call devices, under-seat parts, baggage racks, and decks.

12. The car information control device according to one of claims 1 to 11, comprising announcement means which, when, for operation of the train, a formation of an own train and a formation of another train are coupled or divided, displays a camera image showing a corresponding coupler of the own train and the another train on the screen of the driver's platform display device, or, while displaying a camera image showing the corresponding coupler of the own train and the another train on the screen of the driver's platform display device, announces an alert to outside the train that operation is being performed to couple or divide the formation of the own train and the formation of the another train.

13. The car information control device according to one of claims 1 to 12, comprising announcement means which, when operation is performed at a driver's platform on one side of the train to move the train back in a direction toward another driver's platform on a side opposite to the forward direction of the train, displays a camera image showing a view in the backward direction of the train on the screen of the driver's platform display device or, while displaying the camera image showing a view in the backward direction on the screen of the driver's platform display device, announces an alert to outside the train that the train is moving backward.

14. The car information control device according to one of claims 1 to 13,
wherein, when the train develops an abnormal condition or a device failure, the operation support control means displays an image of a corresponding part of a corresponding car on the screen of the driver's platform display device and causes an alert to be announced to inside and outside the car.

15. The car information control device according to one of claims 1 to 14,
wherein, when a door of any car included in the train fails, the operation support control means causes an image of the door of the car to be displayed on a screen or, while displaying an image showing the door of the car and a corresponding platform gate on the platform side of the train on a screen, causes an alert to be announced to outside the train.

16. The car information control device according to one of claims 1 to 15,
wherein, when a brake of any car included in the train develops an abnormal condition or the pressure of the brake becomes abnormal, the operation support control means causes an image showing an operating condition of a pressure cock of the brake to be displayed on the screen of the driver's platform display device.

17. The car information control device according to one of claims 1 to 16,
wherein, when an emergency call is received from a passenger in any car included in the train, the operation support control means causes an image showing the emergency call device of the car and the passenger having used the device to be displayed on the screen of the driver's platform display device, or, corresponding to operations performed, based on contents of the emergency call from the passenger, by any of the crew members on the screen of the driver's platform display device, selects a camera image showing a baggage rack, an under-seat part or a deck of the train and causes the image to be displayed on the screen of the driver's platform display device.

18. The car information control device according to one of claims 1 to 17,
wherein, when the train stops at a station, the operation support control means causes a camera image showing a target train stop position determined at each station for each train operation, a front position of the train, a platform gate position on the platform side at the station and a corresponding door position of the car, or a forward or backward side part on the platform side of the train to be displayed on the screen of the driver's platform display device.

19. The car information control device according to one of claims 1 to 18,
wherein, when, after the train to stop, under control of an automatic train operation device or a train automatic stop-position controller for the train, at a station has stopped outside a stop position range specified with respect to a target stop position at each station, the train is again moved into the specified stop position range, the operation support control means displays a camera image showing a target stop position for the train, a front position of the train, a platform gate position on the platform side of the train and a corresponding door position of the car, or a forward or backward side part on the platform side of the train on the screen of the driver's platform display device.

20. The car information control device according to one of claims 1 to 19,
wherein, when there are a plurality of display candidates based on the result of estimating the operation state of the train, the operation support control means mainly displays a camera image taken by a camera positioned at a high-priority part among the plurality of cameras on the screen of the driver's platform display device and preliminarily displays a set of images of other candidate parts on a near-edge area of the screen, or, in a case where a plurality of display devices are mounted on the driver's platform of the car, displays a set of images of other candidate parts on another display device mounted on the driver's platform to allow display image selection.
